# EUROPEAN PATENT SPECIFICATION

(11) **EP 4 391 188 B1**
(45) Date of publication and mention of the grant of the patent: **04.02.2026**
(21) Application number: 23843287.6
(22) Date of filing: 14.07.2023
(51) Int. Cl.: H01M 50/342, H01M 50/383, H01M 50/211, H01M 50/148, H01M 50/249, H01M 50/242, H01M 50/207, H01M 50/209, H01M 50/367

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 20.07.2022 KR 20220089760; 20.07.2022 KR 20220089870; 31.08.2022 KR 20220110375; 31.08.2022 KR 20220110392; 26.05.2023 KR 20230068714
(43) Date of publication of application: 26.06.2024
(73) Proprietor: LG Energy Solution, Ltd., Seoul 07335 (KR)
(72) Inventor: KWON, Woo-Yong, Daejeon 34122 (KR); KIM, Seung-Joon, Daejeon 34122 (KR); KIM, In-Soo, Daejeon 34122 (KR); PARK, Jin-Yong, Daejeon 34122 (KR); CHUNG, Se-Yun, Daejeon 34122 (KR); LEE, Myung-Woo, Daejeon 34122 (KR); SHIN, Song-Ju, Daejeon 34122 (KR); CHI, Ho-June, Daejeon 34122 (KR); KANG, Jong-Mo, Daejeon 34122 (KR); KIM, Kyung-Woo, Daejeon 34122 (KR); MOON, Duck-Hee, Daejeon 34122 (KR); YOON, Hyun-Mo, Daejeon 34122 (KR); LEE, Tae-Kyeong, Daejeon 34122 (KR); JEONG, Jong-Ha, Daejeon 34122 (KR); HWANG, Ji-Soo, Daejeon 34122 (KR)
(74) Representative: Plasseraud IP
(86) International application number: PCT/KR2023/010125
(87) International publication number: WO 2024/019438

(56) References cited:
- EP-A1- 4 181 301
- EP-A1- 4 203 156
- CN-A- 113 794 011
- CN-U- 211 929 596
- CN-U- 213 878 332
- KR-A- 20220 021 143
- KR-A- 20220 075 710
- KR-A- 20220 077 517
- KR-A- 20220 098 588
- KR-B1- 102 266 389
- US-B2- 10 446 818

## Description

### TECHNICAL FIELD

The present application claims priority to Korean Patent Application No. 10-2022-0089760 filed on July 20, 2022 in the Republic of Korea, Korean Patent Application No. 10-2022-0089870 filed on July 20, 2022 in the Republic of Korea, Korean Patent Application No. 10-2022-0110375 filed on August 31 2022 in the Republic of Korea, Korean Patent Application No. 10-2022-0110392 filed on August 31, 2022 in the Republic of Korea, and Korean Patent Application No. 10-2023-0068714 filed on May 26, 2023 in the Republic of Korea.

The present disclosure relates to a battery pack and a vehicle including the same, and more particularly, to a battery pack manufactured in a cell-to-pack method and a vehicle including the battery pack.

### BACKGROUND ART

In general, a secondary battery refers to a battery that may be repeatedly charged and discharged, such as a lithium-ion battery, a lithium polymer battery, a nickel cadmium battery, a nickel hydride battery, or a nickel zinc battery. An output voltage of a battery cell corresponding to a basic unit of a secondary battery capable of charging and discharging is about 2.5 V to about 4.2 V.

Recently, as secondary batteries have been applied to devices requiring high output voltage and large charge capacity such as electric vehicles or energy storage systems (ESSs), a battery pack manufactured by connecting a plurality of battery cells in series or in parallel to form a battery module and connecting a plurality of battery modules in series or in parallel is widely used.

However, according to existing technology, because a battery pack is manufactured by accommodating battery cells in a metal case having a box shape to form a battery module and accommodating battery modules in a battery pack case, the overall weight and volume of the battery pack is increased and the energy density of the battery pack is reduced.

Also, when an existing cell-to-pack method of directly mounting a plurality of battery cells on a pack case of a battery pack is applied to a pouch-type battery cell with a soft case in order to increase the energy density of the battery pack, it is difficult to simultaneously handle or stack the plurality of battery cells and there is a risk of damage to the battery cells during a process of mounting the battery cells on the pack case.

Furthermore, in an existing cell-to-pack method, because a plurality of battery cells are space-intensively arranged in a pack case, it is difficult discharge gas or flame generated during thermal runaway in an intended direction, and when thermal runaway occurs in some battery cells, chain thermal runaway of the remaining battery cells may occur.

A battery pack in accordance with the preamble portion of claim 1 is disclosed in the documents EP 4 203 156 A1 and CN 113794011 A.

### DISCLOSURE

### Technical Problem

The present disclosure is designed to solve the problems of the related art, and therefore the present disclosure is directed to providing a battery pack in which the overall weight and volume of the battery pack are reduced, the energy density of the battery pack is increased, handling and mounting of battery cells included in the battery pack is facilitated, and chain thermal runaway is prevented by discharging gas or flame generated during thermal runaway of a battery cell in an intended direction, and a vehicle including the battery pack.

### Technical Solution

According to the present invention, there is provided a battery pack according to the appended claim 1.

In an embodiment, the first venting hole may be configured to be closed when swelling does not occur in the at least one battery cell and to be opened when swelling occurs in the at least one battery cell and an interval between the first cover portion and the second cover portion increases to be equal to or greater than a preset distance.

In an embodiment, the first venting hole may be formed as a cut portion having a line shape in the third cover portion.

In an embodiment, the cut portion may be formed in a notch shape and configured to be ruptured when pressure of the cell cover is equal to or higher than a preset pressure.

In an embodiment, the third cover portion may include a folded portion formed by folding a portion of the third cover portion to close the first venting hole, wherein the folded portion is configured to open the first venting hole when an interval between the first cover portion and the second cover portion increases to be equal to or greater than a preset range.

In an embodiment, the first venting hole may be formed as a through-hole passing through the third cover portion.

In an embodiment, a sealing portion may be located between the folded portion and the through-hole.

In an embodiment, a blocking portion configured to prevent removal of the battery cell inserted into the first cover portion and the second cover portion may be formed on the cell cover.

In an embodiment, the blocking portion may extend from a lower end of the first cover portion or the second cover portion to support a lower end of the battery cell.

In an embodiment, the blocking portion may be formed as a locking structure extending from a lower end of the first cover portion or the second cover portion and bent toward inside of the cell cover.

In an embodiment, an insertion groove may be formed between the blocking portions, wherein a jig configured to change an interval between the first cover portion and the second cover portion of the cell cover is inserted into the insertion groove.

According to the invention, a second venting hole through which gas or flame is discharged is formed in the end cover.

In an embodiment, a gas channel through which gas is movable is formed inside the upper cover, and a communication hole communicating with the first venting hole is formed in the upper cover.

In an embodiment, the pack case may include a reinforcing frame extending upward from inside of the lower frame and coupled to the side frame, wherein the gas channel is formed inside the reinforcing frame, wherein a communication hole communicating with the second venting hole is formed in the reinforcing frame.

In an embodiment, the battery pack may include a hole closing member configured to close the first venting hole, wherein the hole closing member is configured to be damaged as internal pressure of the cell cover increases.

In an embodiment, the hole closing member may be formed of a mica sheet.

In another aspect of the present disclosure, there is provided a vehicle including the battery pack.

### Advantageous Effects

According to embodiments of the present disclosure, the overall weight and volume of a battery pack may be reduced, the energy density of the battery pack may be increased, handling and mounting of battery cells included in the battery pack may be facilitated, and chain thermal runaway may be prevented by discharging gas or flame generated during thermal runaway of a battery cell in an intended direction.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic assembled perspective view illustrating a battery pack according to an embodiment of the present disclosure.
FIG. 2 is a schematic exploded perspective view illustrating a battery pack according to an embodiment of the present disclosure.
FIG. 3 is a view illustrating a bottom surface of an upper cover of FIG. 2.
FIG. 4 is a partial cross-sectional view taken along line A-A' of FIG. 1.
FIG. 5 is a perspective view illustrating a battery cell surrounded by a cell cover according to one embodiment in a battery pack according to an embodiment of the present disclosure.
FIG. 6 is an exploded perspective view illustrating the cell cover and the battery cell of FIG. 5.
FIG. 7 is a view illustrating one modified embodiment of the battery cell surrounded by the cell cover of FIG. 5.
FIG. 8 is a perspective view illustrating a state where a first venting hole of the cell cover of FIG. 7 is deformed by gas discharge.
FIG. 9 is a view illustrating another modified embodiment of the battery cell surrounded by the cell cover of FIG. 5.
FIG. 10 is a cross-sectional view taken along line B-B' of FIG. 9.
FIG. 11 is a view illustrating a state where a through-hole is opened by increased internal pressure of the cell cover in FIG. 10.
FIG. 12 is a view illustrating a modified embodiment of the battery pack of FIGS. 1 and 2.
FIG. 13 is a view for describing a vehicle including a battery pack according to each embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when members are "coupled" or "connected" to each other, the members may be directly coupled or connected to each other, or may be indirectly coupled or connected to each other with an intervening member therebetween.

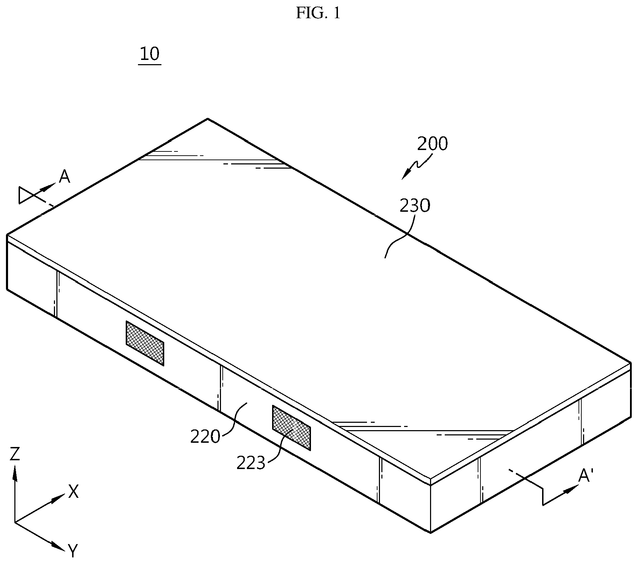

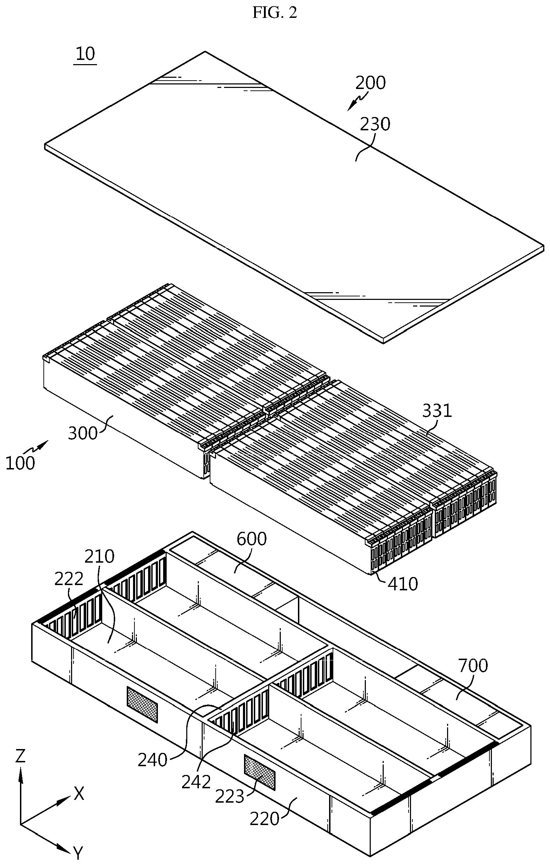

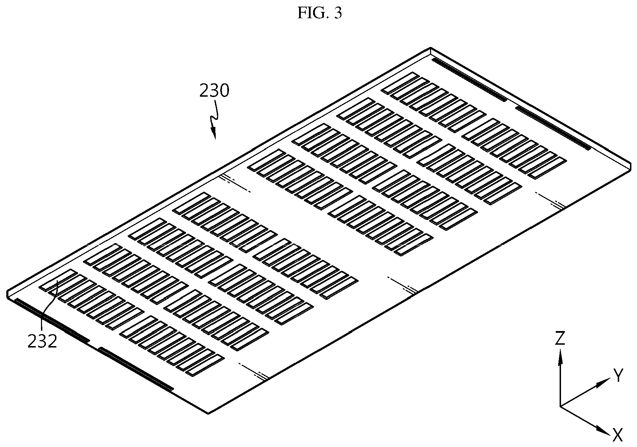

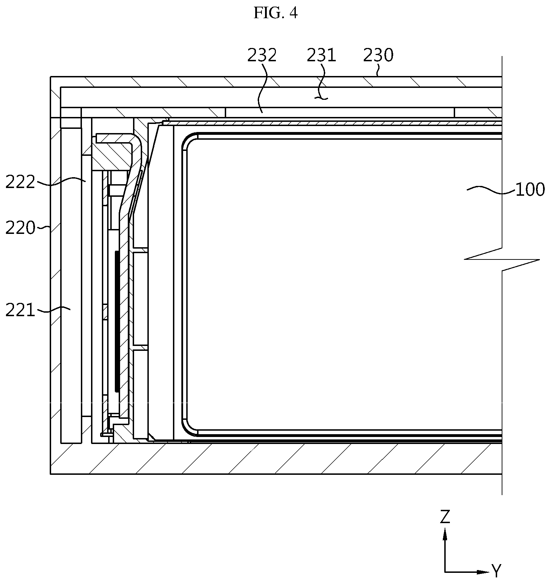

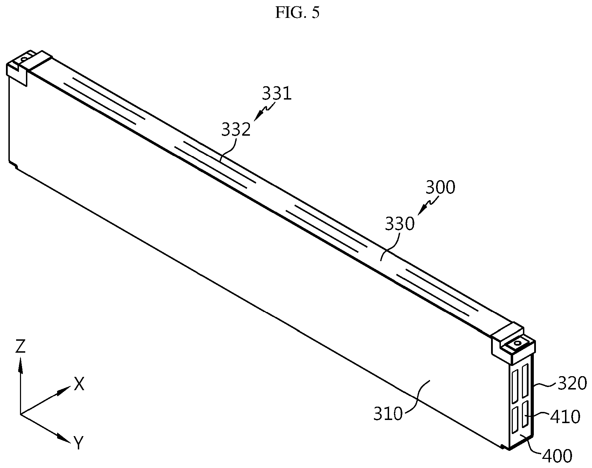

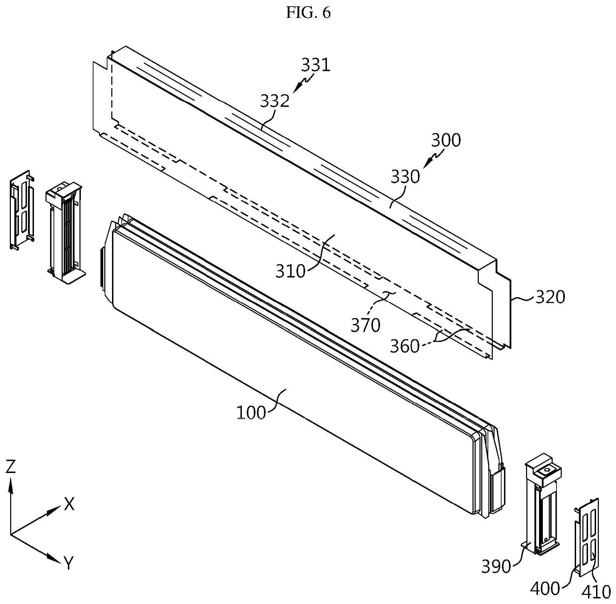

FIG. 1 is a schematic assembled perspective view illustrating a battery pack according to an embodiment of the present disclosure. FIG. 2 is a schematic exploded perspective view illustrating a battery pack according to an embodiment of the present disclosure. FIG. 3 is a view illustrating a bottom surface of an upper cover of FIG. 2. FIG. 4 is a partial cross-sectional view taken along line A-A' of FIG. 1. FIG. 5 is a perspective view illustrating a battery cell surrounded by a cell cover according to one embodiment in a battery pack according to an embodiment of the present disclosure. FIG. 6 is an exploded perspective view illustrating the cell cover and the battery cell of FIG. 5.

As described above, in general, a battery pack 10 is manufactured by accommodating battery cells 100 in a metal case having a box shape to form a battery module and accommodating battery modules in a pack case 200 of the battery pack 10. However, in this case, the overall weight and volume of the battery pack 10 are increased and the energy density of the battery pack 10 is reduced.

In order to solve this problem, the battery pack 10 according to an embodiment of the present disclosure is configured to directly accommodate the battery cell 100 in the pack case 200 of the battery pack 10 by removing a module case of a battery module.

Accordingly, because the battery cell 100 may be further accommodated in a space occupied by the module case of the battery module in the battery pack 10, space efficiency may be improved and battery capacity may be improved. That is, in the present disclosure, the module case of the battery module may not be included in a configuration.

However, an embodiment of using the module case is not completely excluded, and the pouch-type battery cell 100 of each embodiment of the present disclosure may be configured to be accommodated in the module case provided in the battery module when necessary.

That is, the battery module including the pouch-type battery cell 100 to which a cell cover 300 in each embodiment of the present disclosure is coupled also falls within the scope of the present disclosure.

Even when simply described as the battery cell 100 in the specification, the battery cell 100 refers to the pouch-type battery cell 100.

Referring to FIGS. 1 and 2, the battery pack 10 according to a first embodiment of the present disclosure includes the pouch-type battery cell 100, the pack case 200, and the cell cover 300.

The battery cell 100 may include an electrode assembly, an electrolyte, and a pouch casing. That is, the battery cell 100 corresponds to a basic unit for charging and discharging, and may be manufactured by accommodating an electrode assembly and an electrolyte material in a soft metal case and sealing the metal case. In this case, the electrode assembly may be manufactured by locating a separator between a positive electrode and a negative electrode.

Also, electrode leads electrically connected to the electrode assembly may be provided at a front end and a rear end of the battery cell 100. The battery cell 100 may be a pouch-type battery cell. A plurality of pouch-type battery cells 100 may be included in the battery pack 10. The plurality of pouch-type battery cells 100 may be stacked in at least one direction.

The pack case 200 may have an empty inner space, and the plurality of pouch-type battery cells 100 may be accommodated in the inner space. In particular, in the present disclosure, the pouch-type battery cell 100 may be directly seated on the pack case 200.

Referring to FIGS. 5 and 6, the cell cover 300 may at least partially surround at least some of the plurality of pouch-type battery cells 100. That is, the cell cover 300 may partially surround the pouch-type battery cell 100 so that at least one side of the pouch-type battery cell 100 surrounded by the cell cover 300 is exposed to the outside.

The cell cover 300 may be configured to support the pouch-type battery cell 100 in an upright state. In general, it is not easy to stack the pouch-type battery cells 100 in a vertical direction.

However, in the battery pack 10 according to an embodiment of the present disclosure, the cell cover 300 may be configured to surround one or more pouch-type battery cells 100 and maintain the surrounded battery cells 100 in an upright state, that is, an erected state.

The cell cover 300 may be configured so that at least one side of the surrounded pouch-type battery cell 100 is exposed toward a bottom surface of the battery pack 10. However, the present disclosure is not limited thereto.

Referring to FIGS. 1 and 2, the cell cover 300 configured to surround at least some of the plurality of pouch-type battery cells 100 may be accommodated in the inner space of the pack case 200.

The cell cover 300 may be configured to surround a various number of pouch-type battery cells 100 together. For example, one cell cover 300 may be configured to surround one pouch-type battery cell 100. Alternatively, one cell cover 300 may be configured to surround two pouch-type battery cells 100 together. Alternatively, one cell cover 300 may be configured to surround three or more pouch-type battery cells 100 together.

Referring to FIGS. 5 and 6, the cell cover 300 may include a first cover portion 310, a second cover portion 320, and a third cover portion 330.

The first cover portion 310 may be configured to cover one side surface of at least one of the plurality of battery cells 100. The first cover portion 310 may extend downward from one end of the third cover portion 330. For example, the first cover portion 310 may extend long downward from a left end of the third cover portion 330. The first cover portion 310 may surround a wide surface of the battery cell 100 accommodated therein.

The second cover portion 320 may be configured to cover the other side surface of at least one of the plurality of battery cells 100. The second cover portion 320 may be horizontally spaced apart from the first cover portion 310. The second cover portion 320 may extend downward from the other end of the third cover portion 330. For example, the second cover portion 320 may extend long downward from a right end of the third cover portion 330. The second cover portion 320 may surround a wide surface of the battery cell 100 accommodated therein.

The third cover portion 330 connects the first cover portion 310 to the second cover portion 320 and covers an upper end portion of at least one battery cell 100. A first venting hole 331 through which gas or flame is discharged may be formed in at least one portion of the third cover portion 330. The first venting hole 331 will be described below in detail.

In the embodiment, an inner space may be limited by the first cover portion 310, the second cover portion 320, and the third cover portion 330 of the cell cover 300. One or more battery cells 100 may be accommodated in the limited inner space of the cell cover 300.

The cell cover 300 may be provided in an 'n' shape, a 'u' shape, or a '⊂' shape surrounding three surfaces of at least one battery cell 100. Referring to FIG. 2, the cell cover 300 may be configured so that the plurality of battery cells 100 are horizontally stacked while being erected in the vertical direction.

For example, referring to FIG. 2, each cell cover 300 may surround one or more battery cells 100, and the plurality of battery cells 100 surrounded by each cell cover 300 may be stacked in an X-axis direction of FIG. 2. In this case, a structure in which the plurality of battery cells 100 are stacked side by side in the X-axis direction in an upright state may be stably maintained by the cell cover 300.

Also, because the cell cover 300 surrounds three surfaces of at least one battery cell 100, a bus bar or a terminal of each unit may be easily located on a side surface not surrounded by each cell cover 300.

The battery cell 100 such as the pouch-type battery cell 100 may be formed in a substantially hexahedral shape. The electrode leads, that is, a negative electrode lead and a positive electrode lead may be respectively formed on two of six surfaces. The cell cover 300 is provided to surround at least parts of three of the four surfaces of the battery cell 100 having the six surfaces excluding the two surfaces on which the electrode leads are formed.

Referring to FIGS. 5 and 6, the first venting hole 331 is closed when swelling does not occur in the battery cell 100. When swelling occurs in the battery cell 100 and an interval between the first cover portion 310 and the second cover portion 320 coupled to the third cover portion 330 increases to be equal to or greater than a preset distance, the first venting hole 331 may be opened.

In one embodiment, as shown in FIG. 5, the first venting hole 331 may be formed as a cut portion 332 having a line shape in the third cover portion 330. For example, the cut portion 332 may be formed by cutting with a sharp tool such as a knife. For example, a pair of cut portions 332 having straight line shapes may be arranged parallel to each other, but the present disclosure is not limited thereto. That is, as shown in FIG. 5, although a plurality of pairs of cut portions 332 having straight line shapes and arranged parallel to each other may be formed at preset intervals, this is merely an example and the cut portions 332 may be located and arranged in various ways.

In a modified embodiment, the cut portion 332 may be formed in a notch shape and may be configured to be ruptured when pressure of the cell cover 300 is equal to or higher than a preset pressure. That is, when the cut portion 332 is formed, the cut portion 332 may be formed as a cut groove only in the third cover portion 330 without completely passing though the third cover portion 330. In this case, the cut portion 332 is closed when swelling does not occur, but the cut groove is ruptured and the cut portion 332 is opened when swelling occurs, internal pressure of the cell cover 300 increases, and an interval between the first cover portion 310 and the second cover portion 320 is equal to or greater than a preset distance. However, this configuration is merely an example, and the present disclosure is not limited thereto.

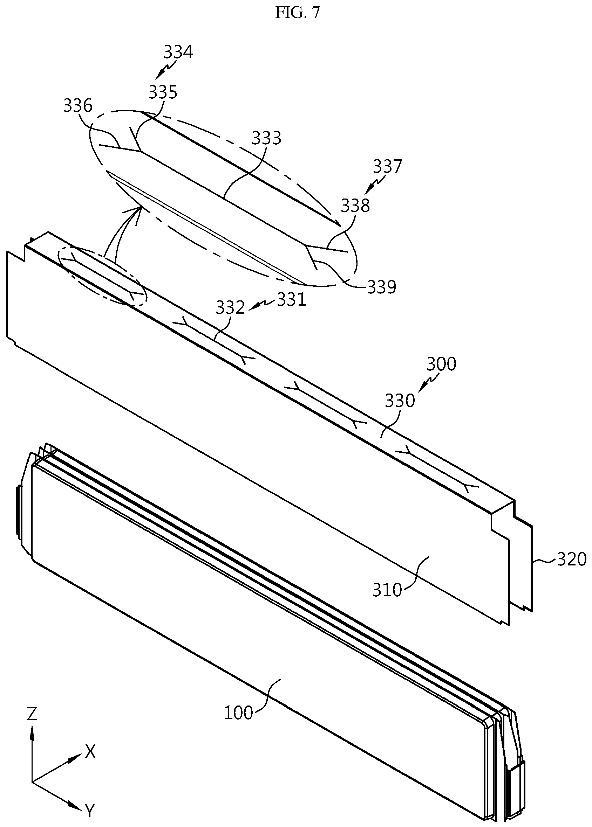

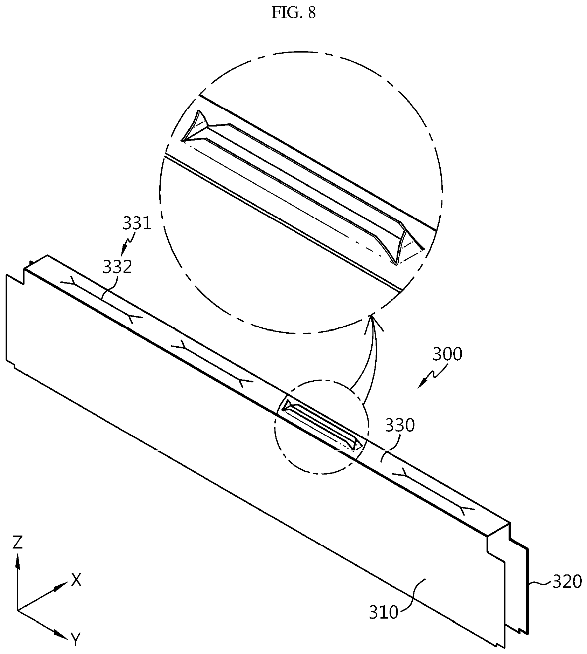

FIG. 7 is a view illustrating one modified embodiment of the battery cell surrounded by the cell cover of FIG. 5. FIG. 8 is a perspective view illustrating a state where a first venting hole of the cell cover of FIG. 7 is deformed by gas discharge. FIG. 7 illustrates a modified embodiment of FIG. 5.

Referring to FIG. 7, in a modified embodiment, the cut portion 332 may extend in a substantially straight line shape along a horizontal extending direction of the cell cover 300, and an end in the extending direction may branch in two directions.

The cut portion 332 includes a central line 333 extending long in a front-back direction (Y-axis direction) that is a longitudinal direction of the cell cover 300 and four branch lines branching from both ends of the central line 333.

In detail, the cut portion 332 may include the central line 333, a first end line 334, and a second end line 337.

The central line 333 of the cut portion 332 is formed at a central portion. A size of the cut portion 332 may be appropriately adjusted according to a scale, size, capacity, etc. of the battery cell 100. The first end line 334 of the cut portion 332 may extend from one end of the central line 333, and the second end line 337 of the cut portion 332 may extend from the other end of the central line 333.

The first end line 334 may include, but is not limited to, a first directional line 335 extending in a first direction from one end of the central line 333 and a second directional line 336 extending in a second direction from the one end of the central line 333. When the first directional line 335 and the second directional line 336 are formed, the cut portion 332 may be more easily ruptured than when only the central line 333 is formed. The first directional line 335 and the second directional line 336 may be symmetrical to each other, but the present disclosure is not limited thereto.

The second end line 337 may include, but is not limited to, a third directional line 338 extending in a third direction from the other end of the central line 333 and a fourth directional line 339 extending in a fourth direction from the other end of the central line 333. When the third directional line 338 and the fourth directional line 339 are formed, the cut portion 332 may be more easily ruptured than when only the central line 333 is formed, like the first directional line 335 and the second directional line 336. The third directional line 338 and the fourth directional line 339 may also be symmetrical to each other, but the present disclosure is not limited thereto.

The first end line 334 and the second end line 337 may also be symmetrical to each other, but the present disclosure is not limited thereto.

The cut portion 332 may be ruptured as shown in FIG. 8 when internal pressure of the cell cover 300 is equal to or higher than a preset pressure, and thus, gas or flame may be discharged through the ruptured cut portion 332.

The cut portion 332 may be formed in any of various portions of the cell cover 300, for example, an upper portion of the cell cover 300. As such, when the cut portion 332 is formed in an upper portion of the cell cover 300, for example, the third cover portion 330, gas or flame may be guided to be discharged in a preset upward direction.

In this case, even when thermal runaway occurs in any one battery cell 100, gas or fame generated in the battery cell 100 may be discharged only through an upper portion of the cell cover 300. Accordingly, propagation or the gas or flame to other battery cells 100 adjacent to a side surface of the battery cell 100 where the thermal runaway occurs may be prevented. That is, even when thermal runaway occurs in any one battery cell 100, the influence of the thermal runaway on other battery cells 100 may be minimized.

Furthermore, according to the configuration of the cut portion 332 as in this embodiment, the effect of preventing thermal runaway propagation between the battery cells 100 may be further improved. In more detail, referring to FIG. 8, a portion of the cell cover 300 where the cut portion 332 is formed may be deformed by discharge pressure of gas during gas discharge as shown in FIG. 8. Due to this deformation, the open area of the cut portion 332 may increase.

When the cut portion 332 is deformed as shown in FIG. 8, gas or flame is guided upward by a deformed portion of the cell cover 300, thereby more effectively suppressing gas from moving in a direction other than an upward direction.

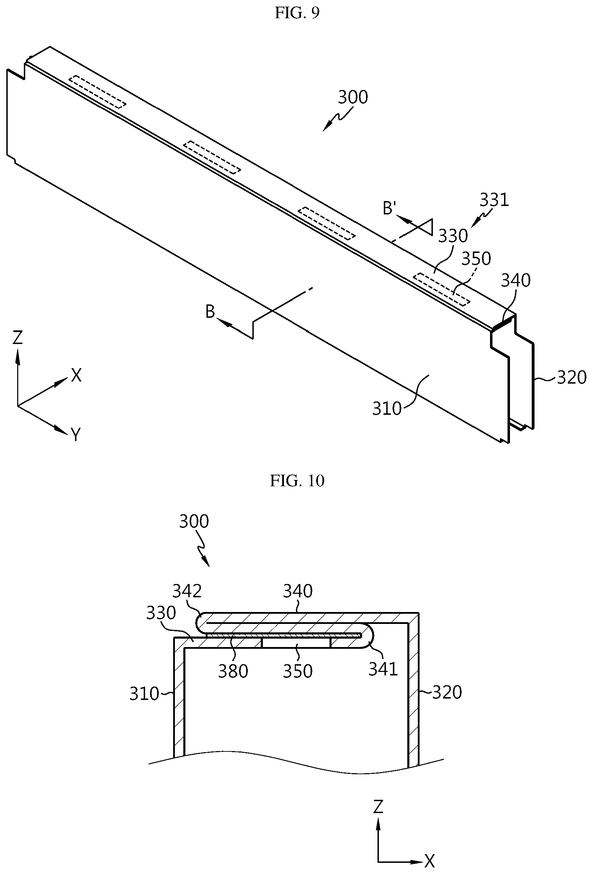

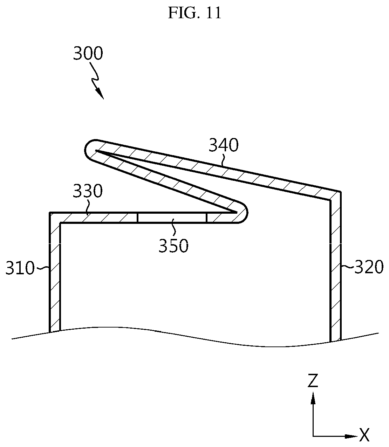

FIG. 9 is a view illustrating another modified embodiment of the battery cell surrounded by the cell cover of FIG. 5. FIG. 10 is a cross-sectional view taken along line B-B' of FIG. 9. FIG. 11 is a view illustrating a state where a through-hole is opened by increased internal pressure of the cell cover of FIG. 10. FIGS. 9 to 11 illustrate a modified embodiment of FIG. 5.

Referring to FIGS. 9 to 11, the third cover portion 330 may include a folded portion 340 that is formed by folding a portion of the third cover portion 330 to close the first venting hole 331. The first venting hole 331 may be formed as a through-hole 350 passing through the third cover portion 330.

The folded portion 340 may be formed by bending one side of the third cover portion 330 once in one direction and then bending the side again in the opposite direction. For example, referring to FIG. 10, the third cover portion 330 is formed in a straight line shape from the left to the right, and is bent once leftward at a right end 341. The third cover portion 330 is bent again rightward at a left end 342.

As such, the folded portion 340 is formed by bending the third cover portion 330 twice, and the through-hole 350 is closed by the folded portion 340. That is, the through-hole 350 is closed by the folded portion 340 before swelling occurs in the battery cell 100. When swelling occurs in the battery cell 100, internal pressure increases due to gas, and an interval between the first cover portion 310 and the second cover portion 320 of the cell cover 300 increases (see FIG. 11). When the interval between the first cover portion 310 and the second cover portion 320 of the cell cover 300 increases to be equal to or greater than a preset range, gas or flame generated in the battery cell 100 may be discharged to the outside through the through-hole 350. A sealing portion 380 (see FIG. 10) may be located between the folded portion 340 and the through-hole 350.

Referring to FIG. 6, a bus bar frame 390 may be coupled to the cell cover 300. The bus bar frame 390 may be configured to support a bus bar electrically connected to the electrode lead of at least one battery cell 100 covered by the cell cover 300. In this case, the bus bar frame 390 may include a terminal electrically connected to the bus bar.

Referring back to FIG. 6, a blocking portion 360 may be formed on the cell cover 300. The blocking portion 360 is configured to prevent removal of the battery cell 100 inserted between the first cover portion 310 and the second cover portion 320.

That is, the blocking portion 360 may be formed as a locking structure that extends from a lower end of the first cover portion 310 or the second cover portion 320 and is bent toward the inside of the cell cover 300. As such, when the blocking portion 360 is formed as a locking structure, the blocking portion 360 may support a lower end of the battery cell 100.

An insertion groove 370 may be formed between the blocking portions 360. A jig may be inserted into the insertion groove 370 formed between the blocking portions 360, and an interval between the first cover portion 310 and the second cover portion 320 of the cell cover 300 may be changed by the jig inserted into the insertion groove 370.

Referring to FIGS. 5 and 6 together, an end cover 400 is configured to cover a side surface of the cell cover 300 on which the electrode lead is located. A second venting hole 410 through which gas or flame is discharged may be formed in the end cover 400. That is, when a thermal event occurs, gas or flame may be discharged through the second venting hole 410.

In the above embodiment, the first venting hole 331 is formed in the third cover portion 330 of the cell cover 300 and gas or flame is discharged through the first venting hole 331. However, in the present embodiment, not only gas or flame may be discharged through the first venting hole 331 of the third cover portion 330 but also gas or flame may be discharged even through the second venting hole 410 formed in the end cover 400.

In the present embodiment, at least one of the first venting hole 331 of the third cover portion 330 and the second venting hole 410 of the end cover 400 may be selectively formed. That is, only the first venting hole 331 may be formed in the third cover portion 330, or only the second venting hole 410 may be formed in the end cover 400, or both the first venting hole 331 of the third cover portion 330 and the second venting hole 410 of the end cover 400 may be formed.

According to this embodiment of the present disclosure, a discharge direction of gas or flame may be guided to an exposed surface of the cell cover 300. For example, according to the embodiment, gas or flame may be discharged laterally through the second venting hole 410 of the end cover 400. Accordingly, directional venting for discharging gas or flame in a preset direction may be easily achieved.

According to each embodiment described above, gas or flame may be discharged upward through the first venting hole 331 of the third cover portion 330 or may be discharged laterally through the second venting hole 410 of the end cover 400. However, discharge here refers to discharge from the cell cover 300, and does not refer to complete discharge from the pack case 200. Hereinafter, an embodiment where gas or flame discharged from the cell cover 300 is completely discharged to the outside of the pack case 200 through the pack case 200 will be described.

However, it may not be desirable for a flame to be completely discharged to the outside of the pack case 200, or it may be desirable for a flame to be discharged to the outside of the pack case 200 when directional venting is desirably achieved. Accordingly, hereinafter, an emission target will be described as gas or the like, and a flame may be included or may not be include in the gas or the like.

First, an embodiment where gas discharged upward through the first venting hole 331 of the third cover portion 330 is discharged to the outside of the pack case 200 will be described.

Referring to FIG. 2, the pack case 200 may include a lower frame 210, a side frame 220, and an upper cover 230. The pack case 200 may be formed of a plastic or metal material. In addition, the pack case 200 may include any of various casing materials for the battery pack 10 which are known at the time of filing the present application.

The plurality of battery cells 100 are seated on the lower frame 210. A reinforcing frame 240 described below may be formed on the lower frame 210.

The side frame 220 may extend upward from an edge of the lower frame 210 to form an inner space in which the plurality of battery cells 100 are accommodated. When the reinforcing frame 240 is formed on the lower frame 210, the battery cell 100 is accommodated in a space formed by the side frame 220 and the reinforcing frame 240. The cell cover 300 is coupled to the battery cell 100.

The upper cover 230 is coupled to the side frame 220 to cover the side frame 220 and the lower frame 210. Referring to FIG. 4, a gas channel 331 through which gas may move may be formed inside the upper cover 230. Referring to FIG. 3, a communication hole 232 communicating with the first venting hole 331 may be formed in the upper cover 230.

That is, at least a part of the upper cover 230 may be empty to form a gas channel 231, and the communication hole 232 is formed at one side of the upper cover 230. The communication hole 232 communicates with the first venting hole 331 of the third cover portion 330 of the cell cover 300, and when gas generated from the battery cell 100 is discharged through the first venting hole 331 of the third cover portion 330, the gas moves into the gas channel 231 inside the upper cover 230 through the communication hole 232 communicating with the first venting hole 331. The gas moves through the gas channel 231 of the upper cover 230 and is discharged through a final discharge hole 223 (see FIG. 2). The final discharge hole 223 may be formed at any of various positions, and for example, as shown in FIG. 2, the final discharge hole 223 may be formed in, but not limited to, the side frame 220. In this case, the side frame 220 and the upper cover 230 are also configured to communicate with each other. Only when the side frame 220 and the upper cover 230 communicate with each other, gas moving through the gas channel 231 inside the upper cover 230 may move to the side frame 220 and may be discharged through the final discharge hole 223.

Next, an embodiment where gas discharged laterally through the second venting hole 410 of the end cover 400 is discharged to the outside of the pack case 200 will be described.

Referring to FIG. 2, the pack case 200 may include the lower frame 210, the side frame 220, and the upper cover 230.

The description of the lower frame 210 is the same as that made in the above embodiment, and thus, a repeated description will be omitted. The gas channel 231 may be formed inside the upper cover 230, like in the above embodiment, or the gas channel 231 may not be formed inside the upper cover 230, unlike in the above embodiment.

In the present embodiment, when the gas channel 231 is formed inside the upper cover 230, both upward discharge of gas through the upper cover 230 and lateral discharge of gas through the end cover 400 are possible. However, when the gas channel 231 is not formed inside the upper cover 230, gas may not be discharged through the upper cover 230, and gas may be discharged only laterally through the end cover 400.

The side frame 220 may extend upward from an edge of the lower frame 210 to form an inner space in which the plurality of battery cells 100 are accommodated, like in the above embodiment.

Referring to FIG. 4, a gas channel 221 through which gas may move may be formed inside the side frame 220. Referring to FIG. 2, a communication hole 222 communicating with the second venting hole 410 may be formed in the side frame 220. That is, at least a part of the side frame 220 is empty to form the gas channel 221, and the communication hole 222 is formed at one side of the side frame 220. The communication hole 222 communicates with the second venting hole 410 of the end cover 400 coupled to the cell cover 300, and when gas generated from the battery cell 100 is discharged through the second venting hole 410 of the end cover 400, the gas may move into the gas channel 221 inside the side frame 220 through the communication hole 222 communicating with the second venting hole 410. The gas moves through the gas channel of the side frame 220 and is discharged through the final discharge hole 223. The description of the final discharge hole 223 is the same as that made in the above embodiment, and thus, a detailed description will be omitted.

Referring to FIG. 2, the pack case 200 may include the reinforcing frame 240. The reinforcing frame 240 may extend upward from the inside of the lower frame 210, and may be coupled to the side frame 220.

Although one reinforcing frame 240 is provided in the pack case 200 in FIG. 2, this is merely an embodiment, and the number of reinforcing frames 240 may be changed in various ways. The reinforcing frame 240 is coupled to the side frame 220 to form a space between the reinforcing frame 240 and the side frame 220, and the battery cell 100 is accommodated in the space.

Although not shown, a gas channel (not shown) through which gas may move may be formed inside the reinforcing frame 240, like in the side frame 220. Referring to FIG. 2, a communication hole 242 communicating with the second venting hole 410 may be formed in the reinforcing frame 240. That is, at least a part of the reinforcing frame 240 may be empty to form a gas channel (not shown), and the communication hole 242 is formed at one side of the reinforcing frame 240. The communication hole 242 communicates with the second venting hole 410 of the end cover 400 coupled to the cell cover 300, and when gas generated from the battery cell 100 is discharged through the second venting hole 410 of the end cover 410, the gas moves to the gas channel (not shown) inside the reinforcing frame 240 through the communication hole 242 communicating with the second venting hole 410. The gas moves through the gas channel (not shown) of the reinforcing frame 240 and is discharged through the final discharge hole 223. That is, the second venting holes 410 on both ends of the end cover 400 may be configured to respectively communicate with the communication hole 222 of the side frame 220 and the communication hole 242 of the reinforcing frame 240. The description of the final discharge hole 223 is the same as that made in the above embodiment, and thus, a detailed description will be omitted.

Also, the battery pack 10 according to the present embodiment may further include a control module configured to control charging and discharging of the pouch-type battery cells 100. Referring to FIG. 2, the control module may include a battery management system (BMS) 600 and a battery blocking unit 700, and may be accommodated in the pack case 200 together with the battery cell 100 and the cell cover 300.

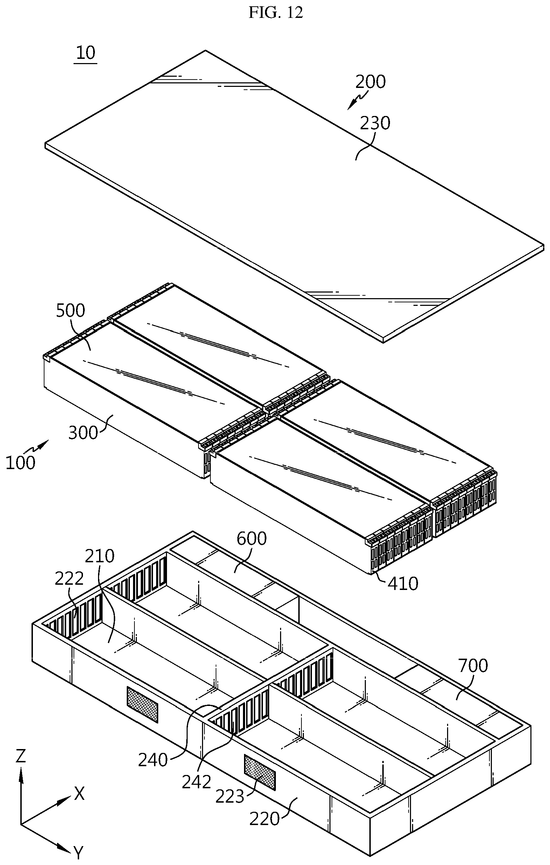

FIG. 12 is a view illustrating a modified embodiment of the battery pack of FIGS. 1 and 2. The same description as that made for the battery pack according to an embodiment of FIGS. 1 and 2 will be omitted.

FIG. 12 is different from an embodiment of FIGS. 1 and 2 in that a hole closing member 500 for closing the first venting hole 331 formed in the third cover portion 330 is included.

In the present embodiment, the first venting hole 331 may be formed in various ways. As described above, the first venting hole 331 may be formed as the cut portion 332 or may be formed as a through-hole as in the above embodiment. The hole closing member 500 is configured to be damaged as internal pressure of the cell cover 300 increases.

That is, the first venting hole 331 is closed by the hole closing member 500 when swelling does not occur, but when internal pressure of the cell cover 300 increases due to swelling, the hole closing member 500 may be damaged to open the first venting hole 331. To this end, the hole closing member 500 may be formed of, but not limited to, a mica sheet. Referring to FIG. 12, the hole closing member 500 may be located to cover an upper side of the cell cover 300.

According to the present disclosure, because the plurality of battery cells 100 are only partially covered by the cell cover 300 having a simplified structure and are directly mounted on the pack case 200, rather than being accommodated in a separate module case and mounted on the pack case 200 of the battery pack 10, the overall weight and volume of the battery pack 10 may be reduced, the energy density of the battery pack 10 may be increased, safe handling and mounting of the battery cells 100 may be facilitated during manufacture of the battery pack 10, and manufacturing costs may be reduced.

Also, because the cell cover 300 includes the first cover portion 310, the second cover portion 320, and the third cover portion 330 and the first venting hole 331 of the third cover portion 330 is opened when an interval between the first cover portion 310 and the second cover portion 320 increases due to swelling of at least one battery cell 100, a foreign material may be prevented from entering the battery cell 100 in a normal situation and the first venting hole 331 through which gas may be discharged when swelling occurs in the battery cell 100 may be immediately provided to prepare against thermal runaway of the battery cell 100.

Also, because the blocking portion 360 of the cell cover 300 supports the battery cell 100 inserted into the cell cover 300 to prevent removal of the battery cell 100, the battery cell 100 may be prevented from changing its position or from being removed to the outside of the cell cover 300 and the safety and reliability of the battery pack 10 may be ensured.

Also, the insertion groove 370 into which a jig configured to contact an inner surface of the cell cover 300 and change an interval between both ends of the cell cover 300 is inserted is provided in the blocking portion 360 of the cell cover 300, and thus an assembly process of inserting the battery cell 100 into the cell cover 300 may be facilitated and damage to the battery cell 100 may be prevented.

Furthermore, one of ordinary skill in the art will clearly understand from the following description that various embodiments of the present disclosure may also be used to solve various technical problems not mentioned above.

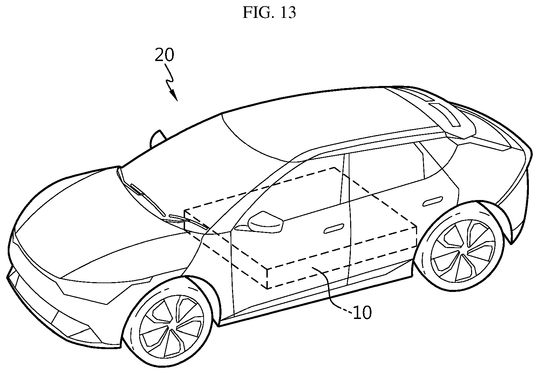

FIG. 13 is a view for describing a vehicle including a battery pack according to each embodiment of the present disclosure.

A vehicle 20 according to an embodiment of the present disclosure may include one or more battery packs 10 according to each of the above embodiments. The vehicle 20 includes any of various devices 20 provided to use electricity such as an electric vehicle or a hybrid vehicle.

It will be understood by one of ordinary skill in the art that when terms indicating directions such as upper, lower, left, and right are used, these terms are only for convenience of explanation and may vary according to a position of a target object, a position of an observer, etc.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims. Hence, the disclosed embodiments should be considered in descriptive sense only and not for purposes of limitation. That is, the scope of the present disclosure is defined only by the following claims.

### INDUSTRIAL APPLICABILITY

The present disclosure relates to a battery pack and a vehicle including the same, and particularly, may be used in industries related to secondary batteries.

## Claims

1. A battery pack (10) comprising:
a plurality of pouch-type battery cells (100),
a pack case (200) comprising a lower frame (210), a side frame (220) and an upper cover (230), the plurality of battery cells (100) being seated on the lower frame (210), the side frame (220) extending upward from an edge of the lower frame (210) to form an inner space in which the plurality of pouch-type battery cells (100) are accommodated, the upper cover (230) being coupled to the side frame (220),
a cell cover (300) at least partially surrounding and supporting at least some of the plurality of pouch-type battery cells (100), in the inner space of the pack case (200), the cell cover (300) comprising a first cover portion (310), a second cover portion (320) and a third cover portion (330), the first cover portion (310) covering one side surface of at least one of the plurality of battery cells (100), the second cover portion (320) covering the other side surface of at least one of the plurality of battery cells (100), the third cover portion (330) connecting the first cover portion (310) to the second cover portion (320) and covering an upper end portion of the at least one battery cell (100), wherein a first venting hole (331) through which gas or flame is discharged is formed in at least one portion of the third cover portion (330), and
an end cover (400) covering a side surface of the cell cover (300) on which the electrode lead is located, and a second venting hole (410) through which gas or flame is discharged is formed in the end cover (400),
the battery pack (10) being **characterized in that**:
a gas channel (221) through which gas is movable is formed in the side frame (220), and
a communication hole (222) communicating with the second venting hole (410) is formed in the side frame (220).

2. The battery pack (10) according to claim 1, wherein the first venting hole (331) is configured to be closed when swelling does not occur in the at least one battery cell (100) and to be opened when swelling occurs in the at least one battery cell (100) and an interval between the first cover portion (310) and the second cover portion (320) increases to be equal to or greater than a preset distance.

3. The battery pack (10) according to claim 2, wherein the first venting hole (331) is formed as a cut portion (332) having a line shape in the third cover portion (330).

4. The battery pack (10) according to claim 3, wherein the cut portion (332) is formed in a notch shape and configured to be ruptured when pressure of the cell cover (300) is equal to or higher than a preset pressure.

5. The battery pack (10) according to claim 1, wherein the third cover portion (330) comprises a folded portion (340) formed by folding a portion of the third cover portion (330) to close the first venting hole (331),
wherein the folded portion (340) is configured to open the first venting hole (331) when an interval between the first cover portion (310) and the second cover portion (320) increases to be equal to or greater than a preset range.

6. The battery pack (10) according to claim 5, wherein the first venting hole (331) is formed as a through-hole (350) passing through the third cover portion (330).

7. The battery pack (10) according to claim 6, wherein a sealing portion (380) is located between the folded portion (340) and the through-hole (350).

8. The battery pack (10) according to claim 1, wherein a blocking portion (360) configured to prevent removal of the battery cell (100) inserted into the first cover portion (310) and the second cover portion (320) is formed on the cell cover (300).

9. The battery pack (10) according to claim 8, wherein the blocking portion (360) extends from a lower end of the first cover portion (310) or the second cover portion (320) to support a lower end of the battery cell (100).

10. The battery pack (10) according to claim 8, wherein the blocking portion (360) is formed as a locking structure extending from a lower end of the first cover portion (310) or the second cover portion (320) and bent toward inside of the cell cover (300).

11. The battery pack (10) according to claim 8, wherein an insertion groove (370) is formed between the blocking portions (360),
wherein a jig configured to change an interval between the first cover portion (310) and the second cover portion (320) of the cell cover (300) is inserted into the insertion groove (370).

12. The battery pack (10) according to claim 1, wherein:
a gas channel (231) through which gas is movable is formed inside the upper cover (230), and
a communication hole (232) communicating with the first venting hole (331) is formed in the upper cover (230).

13. The battery pack (10) according to claim 1, wherein the pack case (200) comprises a reinforcing frame (240) extending upward from inside of the lower frame (210) and coupled to the side frame (220),
wherein the gas channel is formed inside the reinforcing frame (240),
wherein a communication hole (242) communicating with the second venting hole (410) is formed in the reinforcing frame (240).

14. The battery pack (10) according to claim 1, comprising a hole closing member (500) configured to close the first venting hole (331),
wherein the hole closing member (500) is configured to be damaged as internal pressure of the cell cover (300) increases.

15. The battery pack (10) according to claim 14, wherein the hole closing member (500) is formed of a mica sheet.

16. A vehicle comprising the battery pack (10) according to any one of claims 1 to 15.

## Patentansprüche

1. Batteriepack (10), umfassend:
eine Mehrzahl von Batteriezellen (100) vom Beuteltyp, ein Packgehäuse (200), welches einen unteren Rahmen (210), einen Seitenrahmen (220) und eine obere Abdeckung (230) umfasst, wobei die Mehrzahl von Batteriezellen (100) auf den unteren Rahmen (210) gesetzt sind, wobei sich der Seitenrahmen (220) von einem Rand des unteren Rahmens (210) erstreckt, um einen inneren Raum zu bilden, in welchem die Mehrzahl von Batteriezellen (100) vom Beuteltyp aufgenommen sind, wobei die obere Abdeckung (230) mit dem Seitenrahmen (220) gekoppelt ist,
eine Zellenabdeckung (300), welche wenigstens manche aus der Mehrzahl von Batteriezellen (100) vom Beuteltyp in dem inneren Raum des Packgehäuses (200) wenigstens teilweise umgibt und haltert, wobei die Zellenabdeckung (300) einen ersten Abdeckungsabschnitt (310), einen zweiten Abdeckungsabschnitt (320) und einen dritten Abdeckungsabschnitt (330) umfasst, wobei der erste Abdeckungsabschnitt (310) eine Seitenfläche wenigstens einer aus der Mehrzahl von Batteriezellen (100) abdeckt, der zweite Abdeckungsabschnitt (320) die andere Seitenfläche wenigstens einer aus der Mehrzahl von Batteriezellen (100) abdeckt, der dritte Abdeckungsabschnitt (330) den ersten Abdeckungsabschnitt (310) mit dem zweiten Abdeckungsabschnitt (320) verbindet und einen oberen Endabschnitt der wenigstens einen Batteriezelle (100) abdeckt, wobei ein erstes Entlüftungsloch (331), durch welches Gas oder eine Flamme abgeführt wird, in wenigstens einem Abschnitt des dritten Abdeckungsabschnitts (330) gebildet ist, und
eine Endabdeckung (400), welche eine Seitenfläche der Zellenabdeckung (300) abdeckt, an welcher die Elektrodenleitung angeordnet ist, und wobei ein zweites Entlüftungsloch (410), durch welches Gas oder eine Flamme abgeführt wird, in der Endabdeckung (400) gebildet ist,
wobei der Batteriepack (10) **dadurch gekennzeichnet ist, dass**:
ein Gaskanal (221), durch welchen Gas bewegbar ist, in dem Seitenrahmen (220) gebildet ist, und
ein Kommunikationsloch (222), welches mit dem zweiten Entlüftungsloch (410) kommuniziert, in dem Seitenrahmen (220) gebildet ist.

2. Batteriepack (10) nach Anspruch 1, wobei das erste Entlüftungsloch (331) dazu eingerichtet ist, geschlossen zu sein, wenn in der wenigstens einen Batteriezelle (100) eine Schwellung nicht auftritt, und geöffnet zu sein, wenn in der wenigstens einen Batteriezelle (100) eine Schwellung auftritt und ein Zwischenraum zwischen dem ersten Abdeckungsabschnitt (310) und dem zweiten Abdeckungsabschnitt (320) zunimmt, um gleich wie oder größer als ein vorfestgelegter Abstand zu sein.

3. Batteriepack (10) nach Anspruch 2, wobei das erste Entlüftungsloch (331) als ein eingeschnittener Abschnitt (332) gebildet ist, welcher eine Linienform in dem dritten Abdeckungsabschnitt (330) aufweist.

4. Batteriepack (10) nach Anspruch 3, wobei der eingeschnittene Abschnitt (332) in einer Kerbungsform gebildet ist und dazu eingerichtet ist, eingerissen zu werden, wenn ein Druck der Zellenabdeckung (300) gleich wie oder größer als ein vorfestgelegter Druck ist.

5. Batteriepack (10) nach Anspruch 1, wobei der dritte Abdeckungsabschnitt (330) einen gefalteten Abschnitt (340) umfasst, welcher durch ein Falten eines Abschnitts des dritten Abdeckungsabschnitts (330) gebildet ist, um das erste Entlüftungsloch (331) zu schließen,
wobei der gefaltete Abschnitt (340) dazu eingerichtet ist, das erste Entlüftungsloch (331) zu öffnen, wenn ein Zwischenraum zwischen dem ersten Abdeckungsabschnitt (310) und dem zweiten Abdeckungsabschnitt (320) zunimmt, um gleich wie oder größer als ein vorfestgelegter Bereich zu sein.

6. Batteriepack (10) nach Anspruch 5, wobei das erste Entlüftungsloch (331) als ein Durchgangsloch (350) gebildet ist, welches durch den dritten Abdeckungsabschnitt (330) tritt.

7. Batteriepack (10) nach Anspruch 6, wobei ein Abdichtungsabschnitt (380) zwischen dem gefalteten Abschnitt (340) und dem Durchgangsloch (350) angeordnet ist.

8. Batteriepack (10) nach Anspruch 1, wobei ein Blockierungsabschnitt (360), welcher dazu eingerichtet ist, ein Entfernen der Batteriezelle (100) zu verhindern, welche in den ersten Abdeckungsabschnitt (310) und den zweiten Abdeckungsabschnitt (320) eingeführt ist, in der Zellenabdeckung (300) gebildet ist.

9. Batteriepack (10) nach Anspruch 8, wobei sich der Blockierungsabschnitt (360) von einem unteren Ende der ersten Abdeckungsabschnitts (310) oder des zweiten Abdeckungsabschnitts (320) erstreckt, um ein unteres Ende der Batteriezelle (100) zu haltern.

10. Batteriepack (10) nach Anspruch 8, wobei der Blockierungsabschnitt (360) als eine Verriegelungsstruktur gebildet ist, welche sich von einem unteren Ende des ersten Abdeckungsabschnitts (310) oder des zweiten Abdeckungsabschnitts (320) erstreckt und in Richtung eines Inneren der Zellenabdeckung (300) gebogen ist.

11. Batteriepack (10) nach Anspruch 8, wobei eine Einführnut (370) zwischen den Blockierungsabschnitten (360) gebildet ist,
wobei eine Lehre, welche dazu eingerichtet ist, einen Zwischenraum zwischen dem ersten Abdeckungsabschnitt (310) und dem zweiten Abdeckungsabschnitt (320) der Zellenabdeckung (300) zu ändern, in die Einführnut (370) eingeführt ist.

12. Batteriepack (10) nach Anspruch 1, wobei:
ein Gaskanal (231), durch welchen Gas bewegbar ist, im Inneren der oberen Abdeckung (230) gebildet ist, und
ein Kommunikationsloch (232), welches mit dem ersten Entlüftungsloch (331) kommuniziert, in der oberen Abdeckung (230) gebildet ist.

13. Batteriepack (10) nach Anspruch 1, wobei das Packgehäuse (200)
einen verstärkenden Rahmen (240) umfasst, welcher sich von einem Inneren des unteren Rahmens (210) nach oben erstreckt und mit dem Seitenrahmen (220) gekoppelt ist,
wobei der Gaskanal im Inneren des verstärkenden Rahmens (240) gebildet ist,
wobei ein Kommunikationsloch (242), welches mit dem zweiten Entlüftungsloch (410) kommuniziert, in dem verstärkenden Rahmen (240) gebildet ist.

14. Batteriepack (10) nach Anspruch 1, umfassend ein Lochverschließelement (500), welches dazu eingerichtet ist, das erste Entlüftungsloch (331) zu verschließen,
wobei das Lochverschließelement (500) dazu eingerichtet ist, beschädigt zu werden, wenn ein interner Druck der Zellenabdeckung (300) zunimmt.

15. Batteriepack (10) nach Anspruch 14, wobei das Lochverschließelement (500) aus einer Glimmerfolie gebildet ist.

16. Fahrzeug, umfassend den Batteriepack (10) nach einem der Ansprüche 1 bis 15.

## Revendications

1. Bloc-batterie (10) comprenant :
une pluralité de cellules de batterie de type poche (100),
un boîtier de bloc (200) comprenant une structure inférieure (210), une structure latérale (220) et un couvercle supérieur (230), la pluralité de cellules de batterie (100) étant positionnées sur la structure inférieure (210), la structure latérale (220) s'étendant vers le haut à partir d'un bord de la structure inférieure (210) pour former un espace intérieur dans lequel la pluralité de cellules de batterie de type poche (100) sont reçues, le couvercle supérieur (230) étant accouplé à la structure latérale (220),
un couvercle de cellule (300) entourant au moins partiellement et soutenant au moins certaines de la pluralité de cellules de batterie de type poche (100), dans l'espace intérieur du boîtier de bloc (200), le couvercle de cellule (300) comprenant une première partie de couvercle (310), une deuxième partie de couvercle (320) et une troisième partie de couvercle (330), la première partie de couvercle (310) recouvrant une surface latérale d'au moins une parmi la pluralité de cellules de batterie (100), la deuxième partie de couvercle (320) recouvrant l'autre surface latérale d'au moins une parmi la pluralité de cellules de batterie (100), la troisième partie de couvercle (330) reliant la première partie de couvercle (310) à la deuxième partie de couvercle (320) et recouvrant une partie d'extrémité supérieure de l'au moins une cellule de batterie (100), dans lequel un premier trou d'aération (331) à travers lequel du gaz ou une flamme sont évacués est formé dans au moins une partie de la troisième partie de couvercle (330), et
un couvercle d'extrémité (400) recouvrant une surface latérale du couvercle de cellule (300) sur laquelle se trouve le conducteur d'électrode, et un second trou d'aération (410) à travers lequel du gaz ou une flamme sont évacués est formé dans le couvercle d'extrémité (400),
le bloc-batterie (10) étant **caractérisé en ce que** :
un canal de gaz (221) à travers lequel le gaz est mobile est formé dans la structure latérale (220), et
un trou de communication (222) communiquant avec le second trou d'aération (410) est formé dans la structure latérale (220).

2. Bloc-batterie (10) selon la revendication 1, dans lequel le premier trou d'aération (331) est configuré pour être fermé lorsqu'un gonflement ne se produit pas dans l'au moins une cellule de batterie (100) et pour être ouvert lorsqu'un gonflement se produit dans l'au moins une cellule de batterie (100) et qu'un intervalle entre la première partie de couvercle (310) et la deuxième partie de couvercle (320) augmente pour être égal ou supérieur à une distance prédéfinie.

3. Bloc-batterie (10) selon la revendication 2, dans lequel le premier trou d'aération (331) est formé comme une partie coupée (332) ayant une forme de ligne dans la troisième partie de couvercle (330).

4. Bloc-batterie (10) selon la revendication 3, dans lequel la partie coupée (332) a une forme d'encoche et est configurée pour être rompue lorsque la pression du couvercle de cellule (300) est égale ou supérieure à une pression prédéfinie.

5. Bloc-batterie (10) selon la revendication 1, dans lequel la troisième partie de couvercle (330) comprend une partie pliée (340) formée en pliant une partie de la troisième partie de couvercle (330) pour fermer le premier trou d'aération (331), dans lequel la partie pliée (340) est configurée pour ouvrir le premier trou d'aération (331) lorsqu'un intervalle entre la première partie de couvercle (310) et la deuxième partie de couvercle (320) augmente pour être égal ou supérieur à une plage prédéfinie.

6. Bloc-batterie (10) selon la revendication 5, dans lequel le premier trou d'aération (331) est formé comme un trou traversant (350) passant à travers la troisième partie de couvercle (330).

7. Bloc-batterie (10) selon la revendication 6, dans lequel une partie d'étanchéité (380) est située entre la partie pliée (340) et le trou traversant (350).

8. Bloc-batterie (10) selon la revendication 1, dans lequel une partie de blocage (360) configurée pour empêcher le retrait de la cellule de batterie (100) insérée dans la première partie de couvercle (310) et la deuxième partie de couvercle (320) est formée sur le couvercle de cellule (300).

9. Bloc-batterie (10) selon la revendication 8, dans lequel la partie de blocage (360) s'étend à partir d'une extrémité inférieure de la première partie de couvercle (310) ou de la deuxième partie de couvercle (320) pour soutenir une extrémité inférieure de la cellule de batterie (100).

10. Bloc-batterie (10) selon la revendication 8, dans lequel la partie de blocage (360) est formée comme une structure de verrouillage s'étendant à partir d'une extrémité inférieure de la première partie de couvercle (310) ou de la deuxième partie de couvercle (320) et courbée vers l'intérieur du couvercle de cellule (300).

11. Bloc-batterie (10) selon la revendication 8, dans lequel une rainure d'insertion (370) est formée entre les parties de blocage (360),
dans lequel un gabarit configuré pour changer un intervalle entre la première partie de couvercle (310) et la deuxième partie de couvercle (320) du couvercle de cellule (300) est inséré dans la rainure d'insertion (370).

12. Bloc-batterie (10) selon la revendication 1, dans lequel :
un canal de gaz (231) à travers lequel le gaz est mobile est formé à l'intérieur du couvercle supérieur (230), et
un trou de communication (232) communiquant avec le premier trou d'aération (331) est formé dans le couvercle supérieur (230).

13. Bloc-batterie (10) selon la revendication 1, dans lequel le boîtier de bloc (200) comprend une structure de renfort (240) s'étendant vers le haut à partir de l'intérieur de la structure inférieure (210) et accouplé à la structure latérale (220),
dans lequel le canal de gaz est formé à l'intérieur la structure de renfort (240),
dans lequel un trou de communication (242) communiquant avec le second trou d'aération (410) est formé dans la structure de renfort (240).

14. Bloc-batterie (10) selon la revendication 1, comprenant un élément de fermeture de trou (500) configuré pour fermer le premier trou d'aération (331),
dans lequel l'élément de fermeture de trou (500) est configuré pour être détérioré à mesure que la pression interne du couvercle de cellule (300) augmente.

15. Bloc-batterie (10) selon la revendication 14, dans lequel l'élément de fermeture de trou (500) est constitué d'une feuille de mica.

16. Véhicule comprenant le bloc-batterie (10) selon l'une quelconque des revendications 1 à 15.
